# EUROPÄISCHE PATENTSCHRIFT

(11) **EP 2 757 301 B1**
(45) Veröffentlichungstag und Bekanntmachung des Hinweises auf die Patenterteilung: **04.03.2015**
(21) Anmeldenummer: 13151457.2
(22) Anmeldetag: 16.01.2013
(51) Int. Cl.: F16L 59/02, F16L 59/08, F16L 59/16

(54) **Isoliermatratze sowie diese enthaltende Isolieranordnung**
Insulating mattress and insulating arrangement containing this
Matelas isolé ainsi qu'agencement d'isolation le comprenant

(43) Veröffentlichungstag der Anmeldung: 23.07.2014
(73) Patentinhaber: TECHNO-Gewebe Hatzte GmbH, 27404 Elsdorf-Hatzte (DE)
(72) Erfinder: Vajen, Dieter, 27404 Elsdorf-Hatzte (DE)
(74) Vertreter: Hansen, Jochen

(56) Entgegenhaltungen:
- DE-U1-202010 016 709
- US-A- 3 589 971
- US-A1- 2005 115 625

## Beschreibung

Die Erfindung betrifft eine Isoliermatratze für Anlagenteile, insbesondere Armaturen, Rohre und dergleichen in Schiffbau und Anlagenbau, mit einer wärmedämmenden Füllung und einer die wärmedämmende Füllung umschließenden Umhüllung, die eine zum zu dämmenden, heißen Anlagenteil zeigende Innenseite und eine zur Umgebung zeigende Außenseite aufweist, wobei die Innenseite aus einem hitzebeständigem Gewebe und die Außenseite aus einer Metallfolie gebildet ist. Ferner betrifft die Erfindung eine Isolieranordnung mit derartigen Isoliermatratzen.

Isoliermatratzen sind als abnehmbare, wieder montierbare Isolierungen für Rohre, Armaturen, Anlagen und Anlagenteile, insbesondere im Bereich Schiffbau und Anlagenbau in verschiedenen Ausführungen bekannt. Eine Isoliermatratze oder auch Dämmkissen gleicht dabei einer Jacke oder einem Sofakissen, das für den jeweiligen Verwendungszweck an das zu dämmende Bauteil angepasst ist.

Zunehmend werden bei der Herstellung und Verarbeitung von derartigen Isoliermatratzen auf etwaige toxische Ausgasungen, insbesondere Methanal (Formaldehyd) geachtet. Es hat sich jedoch herausgestellt, dass auch bei sog. Formaldehyd-freien Klebern unter den für den Einsatzzweck der Isoliermatratzen erheblichen Temperaturbedingungen bis weit über 400/500 °C gleichwohl Formaldehyd abgegeben wird.

Zur Vermeidung einer schädlichen Formaldehydabgabe bei mit sehr hohen Temperaturen beaufschlagten Isolierungen wurde in der EP 2 095 938 A1 eine Rohrisolierung vorgeschlagen, die eine flexible Filzmatte, die ein- oder mehrlagig um das Rohr gelegt wird, eine über die Filzmatte angeordnete impermeable Folie und eine über der impermeablen Folie angeordnete Gewebeschicht aufweist. Dabei soll die Gewebeschicht einen Glühverlust von < 0,5 % aufweisen, was bei einem Glasfasergewebe durch Ausglühen erreicht werden kann. Dabei wird das Glasgewebe für einen begrenzten Zeitraum, beispielsweise 60 Sek. auf eine Temperatur von mindestens 400 °C gebracht. Entsprechend verbrennen an dem Glasgewebe anhaftende organische Bestandteile, wonach der Glühverlust reduziert wird.

Nachteilig ist, dass zwar eine weitgehende Fomaldehydabgabenminderung erreicht wird, gleichwohl auf der zur Umgebung zeigenden Außenseite weiterhin ein Gewebe frei zugänglich liegt, das aufgrund seines Materials (ausgeglühtes Glasfasergewebe) weiterhin Formaldehyd in geringen Mengen < 0,5 % bei entsprechender Erhitzung abgibt. Ferner ist nachteilig, dass das äußere dünnere Gewebe Schmutz und insbesondere Öl aufnehmen kann, womit die Abwischbarkeit und Reinhaltung erschwert ist und zudem bei einer entsprechenden Verschmutzung keine Feuerfestigkeit mehr gegeben ist. Ferner kann der Aufbau gemäß EP 2 095 938 A1 nur als umlaufende Rohrisolierung ausgebildet werden und eignet sich nicht für die Ausbildung von schnell abnehmbaren und wiedermontierbaren Isoliermatratzen, da die dortige Gewebeschicht entweder aufgeklebt oder durch umlaufendes Vernähen befestigt werden soll. Alternativ kann auch eine Drahtgaze um die Aluminiumfolie herumgelegt und durch umlaufenden Draht befestigt oder beispielsweise wie ein flexibler Strumpf bzw. Schlauch um die Aluminiumfolie auf das Rohr gezogen werden, auf die dann die Gewebeschicht aufgebracht wird.

Aus der US 2005/0115625 A1 ist ein Wärmeschutz für Rohre und Schläuche bekannt, der eine innere Wärmeisolierungsschicht und eine äußere rückstrahlende Schicht aufweist. Die rückstrahlende Schicht ist beispielsweise eine flexible mit Aluminium beschichtete Mylarfolie, wobei die innere Wärmeschutzschicht aus einem hitzebeständigen Glasfaser- oder Silikatfasergewirk besteht. Somit besteht die Außenseite aus einer Metallfolie.

Aus der DE 20 2010 016 709 U1 ist ein elastisches Wärmedämmmodul bekannt, das aus Silikatfasern mit tragendem Glasgewebe gebildet ist, wobei die Silikatfaser mit dem tragenden Glasgewebe mittels Metallnähfäden vernäht ist und auf der Außenseite eine Aluminiumfolie aufkaschiert ist. Zwar wird beschrieben, dass die Klebermenge zum Kaschieren der Alufolie auf dem Glasgewebe zwar auf 50 g pro m² reduziert wird, gleichwohl entstehen bei starker Hitzeapplikation Zersetzungsprodukte des eingesetzten Kaschierungsklebers.

Die US 3,589,971 beschreibt einen Isoliermantel für Instrumente, der eine Asbestgewebeschicht als innere Schicht, eine zweiteilige Zwischenschicht aus wärmedämmendem Material und einem feuerresistenten Baumwollgewebe sowie eine äußere Sicht aus einem neoprenbeschichteten Nylonmaterial aufweist. Zumindest das letztgenannte Material dürfte bei starker Erhitzung unerwänschte Zersetzungsprodukte ausscheiden.

Aufgabe der Erfindung ist es daher, eine Isoliermatratze so weiter zu bilden, dass beim Einsatz auch unter hohen Temperaturen eine Abgabe von flüchtigen Bestandteilen, insbesondere von Formaldehyd vermieden und gleichwohl ein guter Brandschutz auch in schmutziger Umgebung gewährleistet werden kann.

Gelöst wird dies mit einer Isoliermatratze gemäß Anspruch 1.

Die Außenseite hat ein Außengewebe unterhalb der Metallfolie. Dadurch wird die außenseitig liegende Metallfolie durch das darunter bereit gestellte Außengewebe gestützt, womit etwaige Beschädigungen der Metallfolie durch äußere mechanische Beanspruchungen reduziert werden können. Die Metallfolie und das Außengewebe sind miteinander durch Verbindungsmittel, nämlich Nähte, Haken und/oder Krampen verbunden. Dadurch wird die außenliegende Metallfolie auf dem Außengewebe möglichst nahe an diesem anliegend fixiert, womit ein erhöhter Schutz vor Beschädigungen bei größeren äußeren mechanischen Beanspruchungen gewährleistet ist. Da das hitzebeständige Gewebe und/oder das Außengewebe ein Metallgewebe, ein Silikatgewebe oder ein ausgeglühtes Glasfasergewebe ist, geben diese Gewebe kaum giftige Gase, insbesondere kein oder nur äußerst wenig Formaldehyd ab. Insbesondere ist wichtig, dass die Gewebe frei von organischen Anhaftungen sind und nicht mit etwaigen Flüssigkeitssperrbeschichtungen, wie beispielsweise Silikon beschichtet sind. Zur Bildung der Umhüllung ist das hitzebeständige Gewebe am Rand mit der Metallfolie vernäht. Die Nähte sind bevorzugt aus Edelstahl-, Glas-, Kevlargarn oder einem Gemisch aus diesen Komponenten gebildet.

Wenn die Metallfolie eine Alufolie, insbesondere eine Alugrobkornfolie oder eine Edelstahlfolie ist, ist die Folie ausreichend impermeabel und gegenüber Umgebungseinflüssen resistent. Insbesondere Edelstahlfolie ist weitgehend inert. Durch Vorsehen von Alugrobkornfolie wird die mechanische Stabilität der Metallfolie weiter verbessert.

Dadurch, dass die wärmedämmende Füllung aus Mineral- oder Glaswolle oder Nadelfilz, gebildet aus Glas-, Mineralwoll-, Kohlenstoff- und/oder Silikatfasern, besteht, wird bei einer Erhitzung der wärmedämmenden Füllung beim bestimmungsgemäßen Einsatz kein oder kaum toxisch, flüchtige Bestandteile, wie beispielsweise Formaldehyd abgegeben. Bei den anorganischen Dämmmitteln ist darauf zu achten, dass diese weitgehend ohne organische Anhaftungen ausgebildet sind.

Wenn die Isoliermatratze zwischen Innenseite und Außenseite durch die wärmedämmende Füllung geführte Steppnähte, Klammern oder Krampen aufweist, wird die wärmedämmende Füllung in der Umhüllung in ihrer Lage fixiert, so dass ein Zusammenrutschen der wärmedämmenden Füllung und damit eine ungleichmäßige Wärmedämmung vermieden wird. Auch nach mehrfacher Demontage und Remontage der Isoliermatratze wird die wärmedämmende Füllung durch die mechanische Fixierung in der Umhüllung positioniert.

In weiterer Ausgestaltung betrifft die Erfindung eine Isolieranordnung, bei der eine innere Lage von Isoliermatratzen auf dem Anlagenteil und eine äußere Lage von Isoliermatratzen auf der inneren Lage angeordnet sind. Diese zweilagige Verwendung von Isoliermatratzen hat einerseits den Vorteil, dass bei einer Beschädigung der Isolieranordnung von außen, beispielsweise durch übermäßige mechanische Beanspruchung, leicht die äußere Lage getauscht werden kann, ohne dass dann eine vollständige Demontage der Isolieranordnung erforderlich ist. Bei Beachtung bestimmter Sicherheitsvorkehrungen kann somit ggf. ein Austausch der äußeren Isoliermatratzenlage ohne Herunterfahren der damit ausgestatteten Anlage erfolgen. Ebenso können einzelne Isoliermatratzen der inneren Lage bedarfsgerecht bei etwaigen Beschädigungen ausgetauscht werden. Andererseits kann bei einer zweilagigen Verwendung von Isoliermatratzen die äußere Lage mit ihren Stoßfugen versetzt zu der inneren Lage ausgebildet werden, um Wärmeverluste an den Stoßstellen zu verringern. Dabei weist die innere Lage erste Isoliermatratzen auf, deren Umhüllung aus hitzebeständigem Gewebe gebildet ist, wobei die äußere Lage erfindungsgemäße Isoliermatratzen hat.

Dadurch, dass die Isoliermatratzen an ihren Außenseiten Haken, Ösen, Knöpfe, Schnallen, Klettverschlüsse und/oder Zugbänder aufweisen, können die Isoliermatratzen durch Zusammenbinden, Ineinanderhaken, Schaffung von Klettverbindungen und/oder Verzurren von Zugbändern auf den zu isolierenden Armaturen, Rohren oder Anlagenteilen befestigt werden.

Nachfolgend wird ein Ausführungsbeispiel der Erfindung anhand der beiliegenden Zeichnung detailliert beschrieben.

Darin zeigt:
- Fig. 1: eine Isoliermatratze in räumlicher Ansicht in einer ersten Ausführungsform und
- Fig. 2: in einem Längsschnitt eine Isolieranordnung in einem Anwendungsbeispiel.

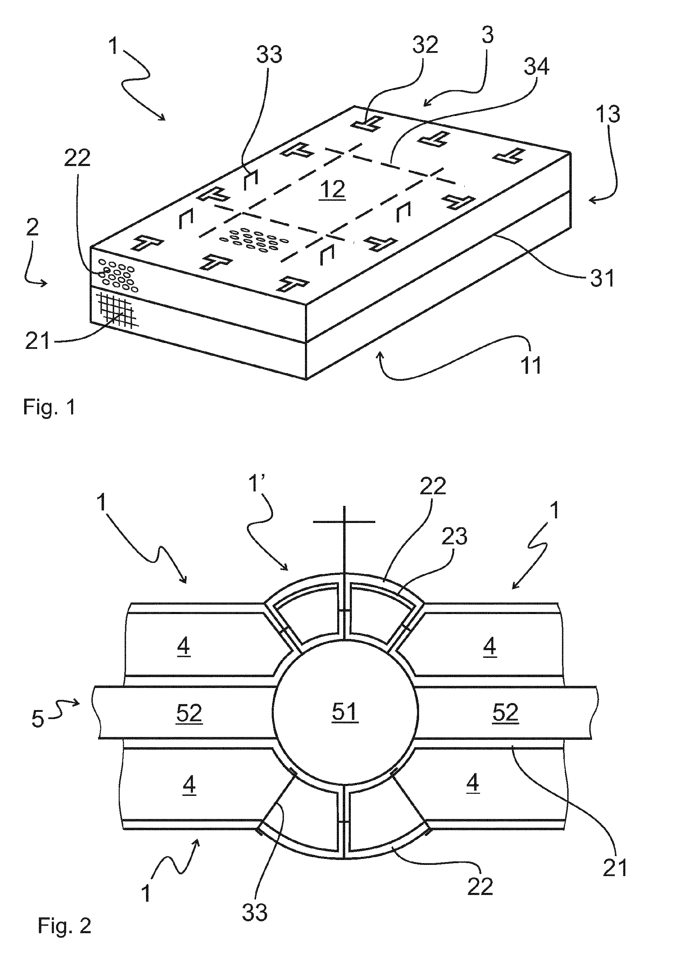

Fig. 1 zeigt eine Isoliermatratze in räumlicher Ansicht in flacher Quaderform. Diese Form ist hier zur leichteren Darstellung gewählt. Selbstverständlich sind auch andere, an zu dämmende Anlagenteile, wie bspw. Turbinen, Motoren, Armaturen, Rohrleitungen, insbesondere Abgasleitungen, oder dergleichen angepasste Formen denkbar.

Die in Fig. 1 dargestellte Isoliermatratze 1 weist eine zum zu dämmenden Anlagenteil zeigende Innenseite 11 auf, wobei in der räumlichen Ansicht in Fig. 1 die Innenseite 11 nach unten zeigt und nicht direkt sichtbar ist. Ebenso ist in Fig. 1 das zu dämmende Anlagenteil nicht dargestellt. Ferner weist die Isoliermatratze 1 gegenüberliegend zur Innenseite 11 eine Außenseite 12 auf, die zur Umgebung zeigt, die bei bestimmungsgemäßer Montage der Isoliermatratze 1 also die Sichtfläche von außen ist. Die Innenseite 11 ist mit der Außenseite 12 über einen die Höhe der Quaderform bildenden Rand 13 verbunden.

Dabei weist die Isoliermatratze 1 eine Umhüllung 2 auf, die aus einem hitzebeständigen Gewebe 21 und einer Metallfolie 22 besteht. Das hitzebeständige Gewebe 21 bildet vollständig die Innenseite 11 und ist am Rand 13 bis etwa zur Hälfte des Randes hochgefaltet. Die Metallfolie 22 bildet vollständig die Außenseite 12 und ist ebenfalls am Rand 13 heruntergefaltet und am Stoßbereich zwischen hitzebeständigem Gewebe 21 und Metallfolie 22 mit einer Naht 31 zu der gewünschten Form, hier flachquaderförmig vernäht. Diese Naht muss dabei jedoch nicht auf der halben Isolierhöhe, wie in Fig. 1 dargestellt, angeordnet sein. Sie kann auch an der Naht zur Unterseite 11 oder an der Naht zur Außenseite 12 angeordnet sein. Der Rand 13 kann je nach Anwendungsfall also auch vollständig aus hitzebeständigem Gewebe 21 oder Metallfolie 22 bestehen.

Das hitzebeständige Gewebe 21 kann ein Silikatgewebe, ein ausgeglühtes Glasfasergewebe oder ein Metallgewebe sein. Die Metallfolie 22 ist bevorzugt eine Alufolie, insbesondere eine Alu-Grobkornfolie oder eine Edelstahlfolie. Unter der Metallfolie 22 ist ein Außengewebe 23 (in Fig. 1 nicht sichtbar), bspw. ebenso wie das hitzebeständige Gewebe 21 aus Silikatgewebe oder ausgeglühtem Glasfasergewebe untergelegt, um die Festigkeit der Metallfolie gegen mechanische Belastungen zu verbessern.

Innerhalb der Umhüllung 2 ist eine wärmedämmende Füllung 4 vorgesehen. Die wärmedämmende Füllung 4 besteht aus: Mineral- oder Glaswolle oder Nadelfilz, gebildet aus Glas-, Mineralwoll-, Kohlenstoff- und/oder Silikatfasern. Beispielsweise kann die Füllung 4 auch aus zwei Schichten bestehen, nämlich an der heißen Seite 50 mm Silikatfaser und zur "kalten" Seite hin 30 mm Nadelfilz aus Mineralwolle. Damit die wärmedämmende Füllung 4 innerhalb der Isoliermatratze 1 lagefest fixiert ist und nicht zu einer Seite zusammengeschoben werden kann, sind von der Außenseite 12 zur Innenseite 11 durchdringende Verankerungen, bspw. Haken 32, Krampen 33 oder Steppnähte 34 vorgesehen.

Die Isoliermatte 1 wird bevorzugt wie folgt hergestellt:
- Erstellen von Zuschnitten aus hitzebeständigem Gewebe 21, Außengewebe 23 und/oder Metallfolie 22 nach einem Schnittmuster für die Isoliermatratze 1,
- Zusammennähen der Zuschnitte zur Umhüllung 2 mit einem Edelstahl-, Glas-, Kevlargarn oder einem Gemisch aus diesen Komponenten,
- Füllen der Umhüllung 2 mit einer wärmedämmenden Füllung 4 und Verschließen der Umhüllung 2,
- Fixieren der in der Umhüllung eingefüllten wärmedämmenden Füllung 4 mit Steppnähten 34, Klammern oder Krampen 33 sowie
- bedarfsweise Anbringen der Verschlüsse wie Haken, Kletten-Knöpfe, Schnallen und dergleichen.

Dabei werden keine Klebstoffe verwendet und Anhaftungen bzw. Beschichtungen der verwendeten Gewebe, Garne, Folien und Füllungen möglichst vermieden.

In Fig. 2 ist eine Isolieranordnung in einem Anwendungsbeispiel in einem Längsschnitt dargestellt. Die Isolieranordnung weist als ein Anlagenteil 5 eine Armatur 51, bspw. ein Kugelventil, und ein Rohr 52 als Zulauf und Ablauf zur Armatur 51 auf. Um diesen Anlagenteil 5 sind verschiedene für den Zweck passend geformte Isoliermatratzen 1, 1' ausgebildet. Dabei werden die Isoliermatratzen 1, 1' mit ihrer Innenseite 11 auf das Anlagenteil 5 aufgelegt, wobei die Isoliermatratzen das Anlagenteil 5 umschließen.

In der Schnittdarstellung ist der Aufbau der erfindungsgemäßen Isoliermatratzen 1, 1' erkennbar. Die Umhüllung 2 besteht auf der Innenseite 11 aus einem hitzebständigen Gewebe 21, das direkt auf dem zu dämmenden Anlagenteil 5 aufliegt. Der äußere Teil der Umhüllung 2 besteht aus der Metallfolie 22, die bevorzugt eine Alu-Grobkornfolie ist. Im Bereich der Armatur 51 ist die Außenseite 12 der Umhüllung 2 unter der Metallfolie 22 mit einem Außengewebe 23 verstärkt.

Ferner sind Haken 32 an der Außenseite 12 der Isoliermatratzen 1, 1' angebracht. Die Haken 32 oder ergänzende Krampen 33 verbinden das Außengewebe 23 mit der darauf liegenden Metallfolie 22, um deren Festigkeit gegen äußere mechanische Beanspruchungen weiter zu verbessern. An den Haken 32 werden Zurrbänder montiert oder Draht zum Verschnüren verwendet, so dass die auf den Anlagenteil 5 aufgebrachten Isoliermatratzen 1, 1' miteinander und das Anlagenteil 5 umschließend verbunden und verzurrt werden können. Damit sind Stoßstellen zwischen aneinander angrenzenden Isoliermatratzen 1, 1' möglichst wärmedämmend verschlossen.

Die erfindungsgemäßen Isoliermatratzen 1 zeichnen sich durch eine individuell an den Anwendungszweck, nämlich das zu umhüllende Anlagenteil 5 angepasste Form aus. Die Isoliermatratzen 1 sind dabei so kleinteilig gegliedert, dass ein Abnehmen für Wartungszwecke des Anlagenteils 5 und eine anschließende erneute Montage auf dem Anlagenteil 5 jederzeit ohne großen Aufwand möglich ist. Entsprechend sind Klettbänder, Zurrgurte, Haken, Knöpfe, Schnallen oder dergleichen an der Außenseite 12 der Isoliermatratzen 1 vorgesehen. In einer hier nicht näher dargestellten Ausführungsform können auch mehrere Lagen von Isoliermatratzen 1, 1', insbesondere zwei Lagen übereinander angeordnet werden. Dabei sollten die Stoßstellen zueinander versetzt sein, um etwaige Wärmeverluste an den Stoßstellen möglichst gering zu halten. Bei einer zwei-oder mehrlagigen Ausbildung der Isolieranordnung können die inneren Isoliermatratzen 1' eine vollständige Umhüllung 2 aus hitzebeständigem Gewebe 21 haben, wohingegen lediglich die äußere Isoliermatratzenlage auf ihrer zur Umgebung zeigenden Außenseite 12 eine Metallfolie 22 aufweist.

Insgesamt liegt der Vorteil der erfindungsgemäßen Isoliermatratzen 1, 1' darin, dass sie für eine schnelle Demontage und Remontage geeignet sind, gleichwohl auf ihrer zur Umgebung zeigenden Außenseite 12 eine weitgehend glatte Oberfläche, nämlich eine Metallfolie 22 aufweisen, so dass diese Außenseite 12 leicht gereinigt werden kann und insbesondere Verschmutzungen kaum anhaften können. Im Gegensatz zu bekannten Rohrisolierungen, bei denen außenseitig ein umhüllendes Gewebe verwendet wird, können die erfindungsgemäßen Isoliermatratzen 1, 1' in der erfindungsgemäßen Isolieranordnung keine brennbaren Flüssigkeiten, wie bspw. Öle aus der Umgebung aufnehmen. Bei entsprechender Ausstattung und Auswahl der verwendeten Materialien bleibt somit eine derartige Isolieranordnung feuerfest. Darüber hinaus wird bei der gewählten Materialzusammenstellung die Abgabe von toxischen Gasen, insbesondere Formaldehyd vermieden.

### Bezugszeichenliste

- 1, 1': Isoliermatratze
- 11: Innenseite
- 12: Außenseite
- 13: Rand

- 2: Umhüllung
- 21: hitzebeständiges Gewebe
- 22: Metallfolie
- 23: Außengewebe

- 3: Verbindungsmittel
- 31: Naht
- 32: Haken
- 33: Krampe
- 34: Steppnaht

- 4: wärmedämmende Füllung

- 5: Anlagenteil
- 51: Armatur
- 52: Rohr

## Patentansprüche

1. Isoliermatratze (1) für Anlagenteile (5), insbesondere Armaturen (51), Rohre (52) und dergleichen in Schiffbau und Anlagenbau, mit einer wärmedämmenden Füllung (4) und einer die wärmedämmende Füllung (4) umschließenden Umhüllung (2), die eine zum zu dämmenden, heißen Anlagenteil (5) zeigende Innenseite (11) und eine zur Umgebung zeigende Außenseite (12) aufweist, wobei die Innenseite (11) aus einem hitzebeständigen Gewebe (21) und die Außenseite (12) aus einer Metallfolie (22) gebildet ist, **dadurch gekennzeichnet, dass** die Außenseite (12) aus der Metallfolie (22) und einem unterhalb der Metallfolie (22) angeordneten Außengewebe (23) besteht, wobei die Metallfolie (22) und das Außengewebe (23) miteinander durch Verbindungsmittel (3), nämlich Nähte (31), Haken (32) und/oder Krampen (33) verbunden sind und das hitzebeständige Gewebe (21) und/oder das Außengewebe (23) ein Metallgewebe, ein Silikatgewebe oder ein ausgeglühtes Glasfasergewebe ist.

2. Isoliermatratze (1) nach einem der vorangehenden Ansprüche, **dadurch gekennzeichnet, dass** das hitzebeständige Gewebe (21) am Rand (13) mit der Metallfolie (22) vernäht ist.

3. Isoliermatratze (1) nach Anspruch 2, **dadurch gekennzeichnet, dass** die Nähte (31) aus Edelstahl-, Glas- oder Kevlargarn oder einem Gemisch aus diesen Komponenten gebildet sind.

4. Isoliermatratze (1) nach einem der vorangehenden Ansprüche, **dadurch gekennzeichnet, dass** die Metallfolie (22) eine Alufolie, insbesondere eine Alu-Grobkornfolie oder eine Edelstahlfolie ist.

5. Isoliermatratze (1) nach einem der vorangehenden Ansprüche, **dadurch gekennzeichnet, dass** die wärmedämmende Füllung (4) aus Mineral- oder Glaswolle oder Nadelfilz, gebildet aus Glas-, Mineralwoll-, Kohlenstoff- und/oder Silikatfasern oder einem Gemisch aus diesen Komponenten, besteht.

6. Isoliermatratze (1) nach einem der vorangehenden Ansprüche, **dadurch gekennzeichnet, dass** sie zwischen Innenseite (11) und Außenseite (12) durch die wärmedämmende Füllung (4) geführte Steppnähte (34), Klammern oder Krampen (33) aufweist.

7. Isolieranordnung mit einem Anlagenteil (5), insbesondere einer Armatur (51), einem Rohr (52) oder dergleichen und darum umschließenden Isoliermatratzen (1, 1'), insbesondere nach einem der vorangehenden Ansprüche, **dadurch gekennzeichnet, dass** eine innere Lage von Isoliermatratzen (1, 1') auf dem Anlagenteil (5) und eine äußere Lage von Isoliermatratzen (1, 1') auf der inneren Lage angeordnet sind, wobei die innere Lage erste Isoliermatratzen (1, 1') aufweist, deren Umhüllung aus hitzebeständigem Gewebe (4) gebildet ist, wobei die äußere Lage Isoliermatratzen (1, 1') nach einem der Ansprüche 1 bis 6 hat.

8. Isolieranordnung nach Anspruch 7, **dadurch gekennzeichnet, dass** die Isoliermatratzen (1, 1') an ihren Außenseiten (12) Haken (32), Ösen, Klettverschlüsse, Knöpfe, Schnallen und/oder Zugbänder aufweisen.

## Claims

1. Insulating mattress (1) for plant components (5), in particular fittings (51), pipes (52) and the like in shipbuilding and plant manufacture, with a thermally insulating filling (4) and a jacket (2) enclosing the thermally insulating filling (4), said jacket having an inner side (11) facing towards the hot plant part (5) to be insulated and an outer side (12) facing towards the surroundings, wherein the inner side (11) is formed from a heat-resistant fabric (21) and the outer side (12) is formed from a metal foil (22), **characterised in that** the outer side (12) consists of the metal foil (22) and an outer fabric (23) arranged underneath the metal foil (22), wherein the metal foil (22) and the outer fabric (23) are joined to one another by joining means (3), namely seams (31), hooks (32) and/or cramps (33) and the heat-resistant fabric (21) and/or the outer fabric (23) is a metal fabric, a silicate fabric or an annealed glass fibre fabric.

2. Insulating mattress (1) according to one of the preceding claims (sic), **characterised in that** the heat-resistant fabric (21) is sewn at the edge (13) to the metal foil (22).

3. Insulating mattress (1) according to claim 2, **characterised in that** the seams (31) are formed from stainless steel yarn, glass yarn or Kevlar yarn or a mixture of these components.

4. Insulating mattress (1) according to one of the preceding claims, **characterised in that** the metal foil (22) is an aluminium foil, in particular a coarse grain aluminium foil or a stainless steel foil.

5. Insulating mattress (1) according to one of the preceding claims, **characterised in that** the thermally insulating filling (4) consists of mineral wool or glass wool or needle felt formed from glass fibres, mineral wool fibres, carbon fibres and/or silicate fibres or a mixture of these components.

6. Insulating mattress (1) according to one of the preceding claims, **characterised in that** between the inner side (11) and outer side (12) it comprises stitched seams (34), clamps or cramps (33) guided through the thermally insulating filling (4).

7. Insulating arrangement with a plant part (5), in particular a fitting (51), a pipe (52) or the like and insulating mattresses (1,1') enclosing the latter, in particular according to one of the preceding claims, **characterised in that** an inner layer of insulating mattresses (1, 1') is arranged on the plant part (5) and an outer layer of insulating mattresses (1, 1') is arranged on the inner layer, wherein the inner layer comprises first insulating mattresses (1, 1'), whose jacket is formed from heat-resistant fabric (4), wherein the outer layer has insulating mattresses (1, 1') according to one of claims 1 to 6.

8. Insulating arrangement according to claim 7, **characterised in that** the insulating mattresses (1, 1') comprise on their outer sides (12) hooks (32), eyes, hook and loop closures, buttons, buckles and/or tiebacks.

## Revendications

1. Matelas isolant (1) pour parties d'installation (5), notamment pour armatures (51), tubes (52) et autres dispositifs similaires, dans la construction navale et la construction d'installations, muni d'un remplissage isolant thermiquement (4) et d'une enveloppe (2) entourant le remplissage isolant thermiquement (4), laquelle enveloppe présente une face intérieure (11) dirigée vers la partie d'installation (5) chaude à isoler et une face extérieure (12) dirigée vers l'environnement extérieur, la face intérieure (11) étant formée d'un tissu résistant à la chaleur (21) et la face extérieure (12) d'un film métallique (22), **caractérisé en ce que** la face extérieure (12) est composée du film métallique (22) et d'un tissu extérieur (23) disposé en dessous du film métallique (22), le film métallique (22) et le tissu extérieur (23) étant reliés ensemble à l'aide de moyens de liaison (3), à savoir des coutures (31), des crochets (32) et/ou des crampons (33), et le tissu résistant à la chaleur (21) et/ou le tissu extérieur (23) étant un tissu métallique, un tissu en silicate ou un tissu en fibres de verre recuit.

2. Matelas isolant (1) selon l'une des revendications précédentes, **caractérisé en ce que** le tissu résistant à la chaleur (21) et le film métallique (22) sont assemblés par couture au bord (13).

3. Matelas isolant (1) selon la revendication 2, **caractérisé en ce que** les coutures (31) sont formées par des fils en acier inoxydable, en verre ou en kevlar, ou d'un mélange de ces composants.

4. Matelas isolant (1) selon l'une des revendications précédentes, **caractérisé en ce que** le film métallique (22) est un film d'aluminium, notamment un film d'aluminium à gros grains, ou un film d'acier inoxydable.

5. Matelas isolant (1) selon l'une des revendications précédentes, **caractérisé en ce que** le remplissage isolant thermiquement (4) est composé de laine minérale ou de laine de verre ou de feutre aiguilleté, formés à base de fibres de verre, de fibres de laine minérale, de fibres de carbone et/ou de fibres de silicate, ou d'un mélange de ces composants.

6. Matelas isolant (1) selon l'une des revendications précédentes, **caractérisé en ce qu'**il présente entre la face intérieure (11) et la face extérieure (12) des crochets, des crampons (33) ou des coutures piquées (34) passant à travers le remplissage isolant thermiquement (4).

7. Ensemble isolant avec une partie d'installation (5), notamment une armature (51), un tube (52) ou un autre dispositif similaire, et des matelas isolants (1, 1') les entourant, notamment selon l'une des revendications précédentes, **caractérisé en ce qu'**une couche intérieure de matelas isolants (1, 1') est disposée sur la partie d'installation (5) et une couche extérieure de matelas isolants (1, 1') est disposée sur la couche intérieure, la couche intérieure étant munie de premiers matelas isolants (1, 1') dont l'enveloppe est formée d'un tissu résistant à la chaleur (4), la couche extérieure ayant des matelas isolants (1, 1') selon l'une des revendications 1 à 6.

8. Ensemble isolant selon la revendication 7, **caractérisé en ce que** les matelas isolants (1, 1') sont munis sur leur face extérieure (12) de crochets (32), d'oeillets, de bandes de fermeture de type crochets et boucles, de boutons, de boucles et/ou de cordons coulissants.
